(19) **Europäisches Patentamt**
**European Patent Office**
**Office européen des brevets**

(11) **EP 2 302 201 B1**

(12) **EUROPEAN PATENT SPECIFICATION**

(45) Date of publication and mention
of the grant of the patent:
**02.04.2014   Bulletin 2014/14**

(51) Int Cl.:
***F03B 3/02*** (2006.01)

(21) Application number: **10181357.4**

(22) Date of filing: **28.09.2010**

(54) **Pump system having energy recovery apparatus**

Pumpe-System mit Rückgewinnung von Energie

Système de pompe ayant appareil pour récupérer de l'énergie

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.09.2009   JP 2009224873**

(43) Date of publication of application:
**30.03.2011   Bulletin 2011/13**

(73) Proprietor: **Hitachi Plant Technologies, Ltd.
Tokyo
170-8466 (JP)**

(72) Inventors:
• **Yoda, Hiroaki
Tokyo 170-8466 (JP)**

• **Chiba, Yoshimasa
Tokyo 170-8466 (JP)**
• **Ishii, Takanori
Tokyo 100-8220 (JP)**

(74) Representative: **Beetz & Partner
Patentanwälte
Steinsdorfstraße 10
80538 München (DE)**

(56) References cited:
**DE-A1- 3 510 160     IT-B- 1 272 452
JP-A- 60 159 301     US-A- 4 230 564**

## Description

BACKGROUND OF THE INVENTION

The present invention relates to a pump system having an energy recovery apparatus used in, e.g., a seawater desalination plant to recover power from energy of concentrated water. A pump system as described in the preamble portion of patent claim 1 has been known from IT 1272453 B.

The market for seawater desalination plants is expected to expand because of, e.g., a growing worldwide need for water and water shortage due to climate change. Water supplied from seawater desalination plants is important for infrastructure. Therefore, reduction of desalination cost and maintenance of water quality for drinking are desirable. Particularly in the reduction of the desalination cost, higher efficiency is desirable for reduction in plant cost and running cost of a reverse osmosis membrane pressurization pump that consumes about fifty percent of electrical energy supplied to the plant.

Additionally, concentrated water discharged as waste water from the reverse osmosis membrane is highly pressured to have large energy. Reduction in plant cost of and higher efficiency of energy recovery equipment, which recovers the large energy, are also strongly desirable. Additionally, for reduction in the plant cost and for higher efficiency of the pump and energy recovery apparatus, the desalination plants have become larger. In Year 2009, the plant capacity has reached half a million to a million m$^3$/day/plant, and therefore, pressurization pumps and concentrated energy recovery apparatuses applicable to large capacity plants are necessary.

(Please refer to JP 6-210140 A)

SUMMARY OF THE INVENTION

In related technologies, reverse osmosis membrane pressurization pumps have a discharge quantity of 600 to 3, 000 m$^3$/h, a net pump head of 550 to 740 m, and a pump shaft power of 1,000 to 6,000 kW. The reverse osmosis membrane pressurization pumps use multistage centrifugal diffuser pumps. On the other hand, Pelton turbines are used in the energy recovery apparatus using concentrated water. As discussed in JP 6-210140 A, in the usage of energy of concentrated water, an output shaft of the Pelton turbine is coupled to a main shaft of a motor driving a pressurization pump to use rotational energy recovered by the Pelton turbine as part of driving force for the pressurization pump. In such a way, energy saving for the pressurization pump is achieved. An amount and pressure of the concentrated water is about 300 to 1,800 m$^3$/h, the head is 500 to 700 m, and its energy is about 500 to 3,600 kW, which is large to reach about 40 to 60 percent of the pressurization pump driving force.

In the past, for example as discussed in Patent Document 1, since the above pressurization pump and energy recovery apparatus are separately designed, produced, and configured, man-hours for the installation are increased and the configuration becomes larger. Particularly, in a plant having larger capacity than the above specification, a pump and energy recovery apparatus become larger and plant cost may thus rise. Regarding efficiency, there is a limit to separate efficiency improvement of each section.

IT 272452 B discloses a pump system having an energy recover apparatus, the pump system comprising a pressurization pump; and a hydro turbine used for the energy recover apparatus, the energy recover apparatus recovering energy from high-pressure concentrated waste water to use the energy as driving force for the pressurization pump when raw water pressurized by the pressurization pump is filtered by a reverse osmosis membrane, the hydro turbine having multistage turbine impellers coaxial with a rotation shaft of the pressurization pump, the turbine impellers being disposed opposite pump impellers of the pressurization pump.

In view of disadvantages of the above past technologies, it is the object of the present invention to provide a compact, efficient pump system having an energy recovery apparatus in which a pressurization pump and the energy recovery apparatus are totally integrated.

This object is accomplished with a pump system as claimed in claim 1.

Dependent claims are directed on features of preferred embodiments of the invention.

The present invention is a pump system having an energy recovery apparatus which recovers energy from high-pressure concentrated waste water through a reverse osmosis membrane to use the energy as driving force for the pressurization pump when raw water pressurized by a pressurization pump is filtered by the reverse osmosis membrane. The energy recovery apparatus uses a hydro turbine having multistage turbine impellers coaxial with a rotation shaft of the pressurization pump. The turbine impellers are disposed opposite pump impellers of the pressurization pump.

The pump system having the energy recovery apparatus includes an axial thrust support device which supports an axial thrust of the turbine impellers and an axial thrust of the pump impellers.

In the above pump system having the energy recovery apparatus, the pressurization pump and the hydro turbine are disposed to position an inlet side (low pressure side) of the pressurization pump and an outlet side (low pressure side) of the hydro turbine adjacent one another.

In the above pump system having the energy recovery apparatus, the rotation shaft for the pressurization pump and hydro turbine is supported by a radial submerged bearing.

In the above pump system having the energy recovery apparatus, the axial thrust support device is an axial thrust balancing device using a balancing disc.

In the above pump system having the energy recovery apparatus, an end of the rotation shaft for the pressurization pump and hydro turbine has a non-seal structure using an end cover.

According to the present invention, a pressurization pump and an energy recovery apparatus are integrated to obtain compactness and higher efficiency.

Particularly, a multistage turbine is used as the energy recovery apparatus. Accordingly, unlike a Pelton turbine, not only a pump portion but a turbine portion do not need to be mounted higher than a liquid level for discharging water, and a height of a mounting surface for the apparatus can be made low. As a result, it becomes easier to ensure capability of an inlet of the pump.

Pump impellers and turbine impellers are disposed opposite each other. Accordingly, the axial thrusts are opposite each other and can be thus partially cancelled. Therefore, the axial thrust balancing device using the balancing disc for the pump can be more compact, and higher reliability of a sliding portion of the balancing device and higher efficiency due to reduction of leakage loss can be achieved. These favorable advantages become more important particularly when a desalination plant becomes larger.

Since multistage impellers are used to design a highly efficient turbine when the plant has a relatively small capacity, the number of stages of the impellers is designed not to be larger (equal to or under three to five stages). Actually, an amount of desalination is favorably equal to or over 5,000 to 10,000 m$^3$/day per a single row (per one reverse osmosis membrane pressurization pump) as an applicable plant size.

BRIEF DESCRIPTION OF THE DRAWINGS

Fig. 1 is a cross section of a structure of Embodiment 1 of a pump system having an energy recovery apparatus of the present invention;
Fig. 2 is a cross section of a structure of Embodiment 2 of the pump system of the present invention;
Fig. 3 is a structure of a desalination plant using the pump system; and
Fig. 4 shows an angle of a turbine guide vane and an angle of a diffuser 5 of a pump.

DESCRIPTION OF THE PREFERRED EMBODIMENTS

Embodiments of the present invention are explained below in reference to the drawings.

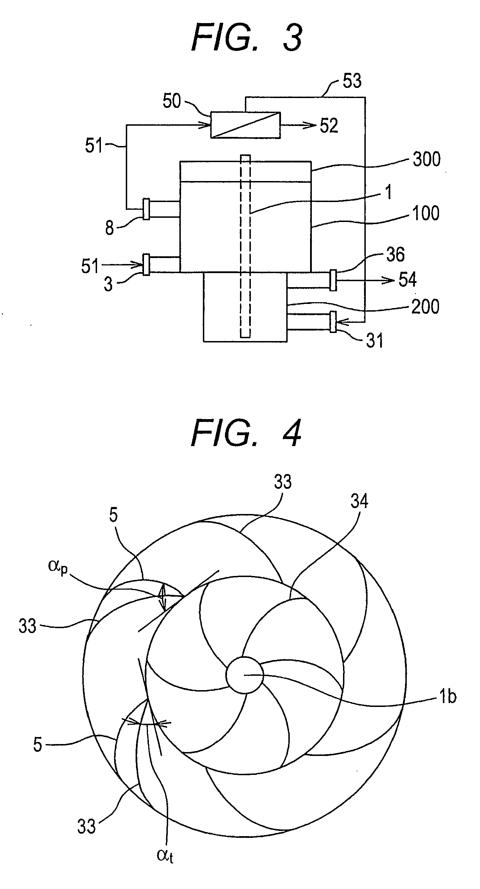

First, a seawater desalination plant using a pressurization pump of the present invention is explained. Fig. 3 shows a pressurization pump 100 using a centrifugal pump, a Francis turbine 200 (hydro turbine) as an energy recovery apparatus disposed below the pressurization pump 100 to recover power energy, a rotation shaft 1 common to the pressurization pump 100 and hydro turbine 200, an axial thrust support device 300 for supporting the axial thrust of rotation of both the pump and turbine, and a high-pressure reverse osmosis membrane unit 50 for removing impurity from raw water including impurity such as salt through an osmosis membrane process.

When the pressurization pump 100 is driven by an electric motor (not shown), the rotation shaft 1 rotates, raw water 51 including impurity such as salt is drawn from a pump inlet 3, discharged from an outlet 8, and supplied to the high-pressure reverse osmosis membrane unit 50. The high-pressure reverse osmosis membrane unit 50 applies a reverse osmosis membrane process to the raw water 51 including impurity such as salt, and discharges permeate water 52 from which impurity such as salt has been removed. On the other hand, high-pressure concentrated water 53, which has been left by the reverse osmosis membrane process, is supplied to a turbine inlet of the turbine 200, and recovered as part of energy for driving (rotating) this turbine. Concentrated water 54 from which energy has been recovered in the turbine section is then discarded from a turbine outlet 36 outside the system.

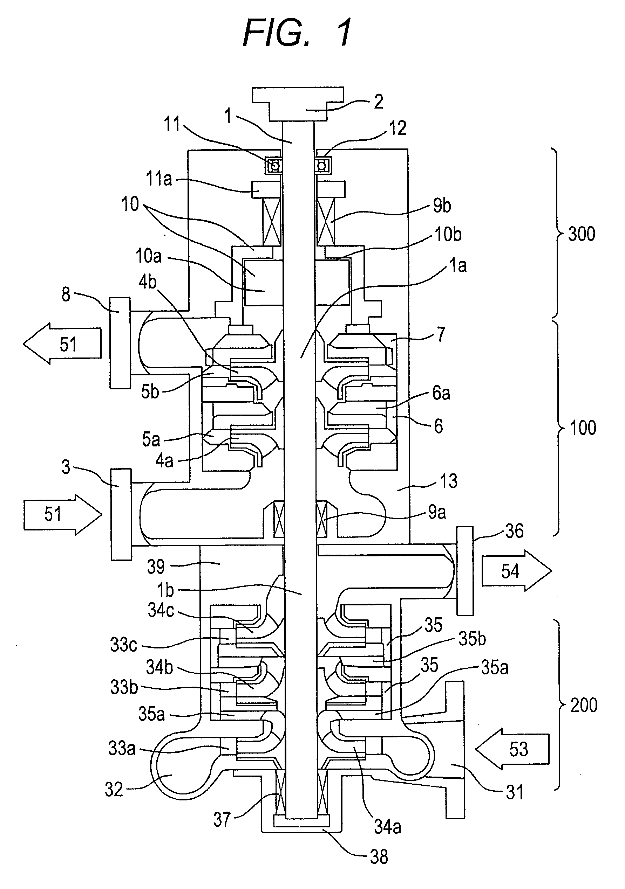

Embodiment 1 of the pump system of the present invention is explained in reference to a cross section of Fig. 1. In the general structure, the rotation shaft 1 common to the centrifugal pressurization pump 100 and Francis turbine 200 is a vertical shaft, the pressurization pump 100 is disposed above the Francis turbine (hydro turbine) 200 which recovers energy, and the axial thrust support device 300 supports an axial thrust acting on pump impellers of the pressurization pump 100 and an axial thrust acting on turbine impellers of the hydro turbine 200. The rotation shaft 1 is a rotation shaft common to the pressurization pump 100, turbine 200, and axial thrust support device 300, and described as a shaft 1a in the pressurization pump and as a shaft 1b in the turbine.

The pressurization pump 100 includes, in a pump casing 13, two stages of centrifugal impellers 4a (first stage pump impeller) and 4b (second stage pump impeller), and diffusers 5a and 5b disposed to respective peripheral outlets of the pump impellers 4a and 4b. The pump inlet 3 in communication with the impeller 4a is provided to a lower portion of the casing 13. The outlet 8 in communication with the impeller 4b is provided to an upper portion of the casing 13. A static fluid path 6 having a square bracket shape connects between the first and second stage impellers. Return vanes 6a are disposed radially from the shaft center in the radial direction to straighten a flow to the next stage impeller.

In general, multistage pump impellers (two stage impellers in this Embodiment) are provided to a pump, a net pump head of which is high to be about 500 to 800 m. Pump driving power is applied to the pump rotation shaft 1a via a shaft coupling 2 from, e.g., an electric motor (not shown). The pressurization pump 100 draws the seawater 51 as raw water from the inlet 3. A pressure of the seawater 51 is raised at the first and second stage pump impellers 4a and 4b. The diffusers 5a and 5b change kinetic energy of the flow to pressure energy. The seawater 51 flows from the first stage to second stage through the static fluid path 6 having a square bracket shape, and the flow to the next stage is straightened by the return vanes 6a. The flow which has come out of the second stage impeller 4b is gathered to a concentric space 7 via the diffuser 5b, and discharged from the outlet 8.

The pump shaft 1a is supported radially by a bearing 9a disposed to a lower end of the pump inlet 3 and an upper bearing 9b of the pump shaft 1a. These bearings are submerged bearings formed of a self-lubricating material (for example, a Poly-Ether-Ether-Ketone (PEEK) resin material). Each bearing can function as a bearing by a property of the self-lubricating material and by lubrication of a self lubricant.

On the other hand, regarding a thrust bearing, a great downward axial thrust generated in the pump impellers 4a and 4b at the time of rotation of the pump is balanced by an automatic axial thrust balancing device 10 not to act the axial thrust on a thrust bearing 11. In this automatic axial thrust balancing device 10, the axial thrust is balanced such that, in response to the axial thrust generated in the impellers, the whole of the pump shaft 1a automatically goes up and down to change a clearance of a clearance portion 10b and to thereby regulate a pressure on a back of a balancing disc 10a. Therefore, the thrust bearing 11 may be a bearing for supporting a self-weight of the pump rotor when the pump is at rest.

In this Embodiment, a ball bearing is used as the thrust bearing 11, an inner ring of the ball bearing is secured to the shaft 1, and the outer ring is fitted movably in the axial direction. When the pump is at rest, a stationary stopper 11a on a lower side of a case of the bearing supports the self-weight of the pump rotor via the ball bearing 11. Regarding a shaft seal for a penetration portion of the pump shaft 1a to the atmosphere, a leakage flow largely depressurized from a discharge pressure of the pump through the automatic axial thrust balancing device 10 is sealed by a shaft seal 12 such as a gland seal. The leakage flow is returned to the pump inlet 3 via piping (not shown).

The axial thrust support device 300 includes the axial thrust balancing device 10 and thrust bearing 11, and is provided to an upper portion of the rotation shaft 1 in the pump casing 13.

On the other hand, regarding the hydro turbine 200 for energy recovery, an effective head of water power of the high-pressure concentrated water 53 left by the reverse osmosis process is generally the same as a net pump head of the pump, and the flow rate is smaller than a rate after subtracting a reverse osmosis membrane permeate flow rate from a pump water supply, namely about 40 to 60 percent of the pump water supply. Accordingly, a specific speed Ns of the hydro turbine can be obtained by Equation (1).

[Equation 1]

$$Ns = \frac{N\sqrt{Q}}{H^{\frac{3}{4}}} \qquad (1)$$

In Equation 1, Ns shows a hydro turbine specific speed, N shows hydro turbine revolutions per minute (rpm), Q shows Hydro turbine flow rate ($m^3$/min), and H shows an effective head (m). In the Francis hydro turbine, a high specific speed is necessary to design a hydro turbine in which higher efficiency is easily obtainable. When the number of stages of impellers of the hydro turbine is made smaller than that of the pump, a specific speed of the impellers of the hydro turbine is slower than that of the pump (no energy is recovered). This is not favorable for higher efficiency. Therefore, it is necessary to set the number of the stages of the impellers of the hydro turbine to at least equal to or greater than that of the pump.

Accordingly, in the turbine 200, three stages of turbine impellers, the number of which is greater than that of the pump, the turbine impellers including a turbine impeller 34a (the first stage turbine impeller), a turbine impeller 34b (the second stage turbine impeller), and a turbine impeller 34c (the third stage turbine impeller), are coaxially disposed within the turbine casing 39 opposite the pump impellers 4a and 4b (facing the impellers to each other). Guide vanes 33a (the first stage guide vanes), 33b (the second stage guide vanes), and 33c (the third stage guide vanes) are disposed to respective guide portions to the turbine impellers to straighten a fluid flow flowing to each turbine impeller 34 and to regulate a direction of the flow. A water path 35 is interposed between each stage to provide return vanes 35a and return vanes 35b. The return vanes prevent the flow which has come out of each turbine impeller from swirling, and straighten the flow. The turbine inlet 31 in communication with the turbine impeller 34a is disposed to a lower portion of the casing 39. The turbine outlet 36 in communication with the turbine impeller 34c is disposed to an upper portion of the casing 39.

The turbine 200 is mounted below the pressurization pump 100 to position the pump inlet 3 of the pump casing 13 and the turbine outlet 36 of the turbine casing 39 adjacently to one another. In such a way, a specific seal mechanism is unnecessary for a connection portion between the pump inlet 3 of the pressurization pump 100 and the turbine outlet 36 of the turbine 200, because the pump inlet 3 and the turbine outlet 36 are both on the low pressure side and have a low differential pressure therebetween.

The high-pressure concentrated water 53 through the reverse osmosis membrane from the high-pressure reverse osmosis membrane unit 50 flows from the turbine inlet 31. First, at an inlet volute 32 and the first stage guide vanes 33a, the water 53 is straightened and a direction of the flow of the water 53 is regulated. Then, the water 53 flows into the first stage impeller 34a to change energy of one third of the effective head into mechanical power. Next, the water 53 flows through the return vanes 35a and water path 35 and flows into the second stage impeller 34b through the second stage guide vanes 33b. After that, the water 53 flows through the return vanes 35b and water path 35 and flows into the third stage impeller 34c through the third stage guide vanes 33b. Finally, after the energy of the effective head is changed at the third stage impeller 34 c , the water 53 is discharged from the turbine outlet 36 outside the turbine.

Regarding an axial thrust generated by the turbine 200, an upward axial thrust is generated in each turbine impeller 34a, 34b, and 34c, and is generally proportional to the effective head and the square of an outer diameter of the impeller. An outer diameter D of the turbine impeller is obtained by Equation (2).

$$[\text{Equation } 2]$$

$$D = C \cdot \frac{\sqrt{2gH}}{\frac{N}{60}\pi} \qquad (2)$$

In Equation 2, D shows an outer diameter of a turbine impeller, C shows a peripheral velocity coefficient of a turbine impeller (dimensionless number) , H shows an effective head per one stage (m), and N shows revolutions per minute (rpm) of a turbine impeller. An axial thrust F is calculable by Equation (3).

$$[\text{Equation } 3]$$

$$F \propto n \cdot \frac{\pi}{4} D^2 \rho g H \qquad (3)$$

In Equation 3, F shows an axial thrust (N), n shows the number of hydro turbine stages, $\rho$ shows a density (kg/m$^3$) of seawater, g shows a gravitational acceleration (m/s2), and H shows an effective head per one hydro turbine stage. Since the number of the stages of the turbine impellers is greater than that of the pressurization pump, an effective head per one turbine impeller is smaller than a net pump head per one stage of the pump. At the same time, given that a peripheral velocity coefficient of the turbine impeller is usually smaller than that of the pump impeller, an outer diameter of the turbine impeller is smaller than that of the pump impeller. Therefore, as shown in Equation (3), since the turbine and pump are generally the same in (n*H), an axial thrust of the turbine 200 is smaller than an outer diameter of the pump impeller due to an outer diameter of the turbine impeller.

A downward axial thrust of the pump impeller is partially cancelled by an upward axial thrust of the turbine impeller, and thus becomes smaller. This remaining axis thrust, which has been made smaller, can be balanced by the axial thrust balancing device 10 of the pump.

Actually, since this remaining downward axis thrust becomes smaller than an axial thrust generated by the pump impeller, an outer diameter of balancing disc 10a can be designed smaller than that in a structure having only a pump. Therefore, reduction in size and weight of the balancing disc 10a becomes possible. More reliable design for rotor dynamics of the pump shaft 1 becomes possible. An amount of leak from a peripheral clearance of the balancing disc to the atmosphere can be reduced. Higher efficiency of the pump can be obtained.

On the other hand, the turbine shaft 1b is supported by a bearing 37 on a lower end of the turbine shaft 1b and a pump bearing 9a. When these bearings are submerged bearings as well as the bearings 9a and 9b of the pump, a bearing lubrication device is unnecessary to achieve easy downsizing and maintenance of the system.

When an end cover 38 covers an end of the turbine shaft 1b as a self lubrication submerged bearing, a shaft penetration portion is unnecessary. Therefore, a shaft seal of a sealing mechanism is unnecessary and leakage loss can be avoided, improving efficiency of the turbine. Since, as described above, the connecting portion between low-pressure portions of the pump casing 13 and turbine casing 39 has a small differential pressure, a shaft seal of a specific sealing mechanism is unnecessary for the connecting portion. Therefore, seawater can be prevented from leaking from the turbine in which water has a high salinity concentration to the pump in which water has a low salinity concentration, and thus a salinity concentration of supplied water can be easily prevented from increasing.

As mentioned above, a flow rate of the concentrated water 53 in the turbine 200 is obtained by subtracting a reverse osmosis membrane permeate flow from a pump water supply, namely about forty to sixty percent of the pump water supply, and smaller than the pump water supply. For the turbine 200 to obtain higher efficiency even at a small amount of water, when the concentrated water 53 is guided to flow into each turbine impeller by each guide vane, a flow direction (angle) of each guide vane is regulated.

Fig. 4 is a view explaining relationship between an angle of each turbine guide vane 33 relative to the turbine impeller 34 and an angle of each diffuser 5 of the pump. In this figure, the diffusers 5 (only part of which is shown) are shown on the assumption that the same impeller as the pump impeller is used as the turbine impeller 34. In this Embodiment, when an angle of the turbine guide vane 33 relative to a tangent to an outer circumference of the turbine impeller 34 is $\alpha t$ and an angle of the diffuser 5 of the pump relative to a tangent to an outer circumference of the pump impeller is $\alpha p$, relationship between these angles is $\alpha t < \alpha p$. With this setting of the angles, the concentrated water is guided to the turbine impeller 34 generally at a right angle to transfer energy efficiently even when an amount of the concentrated water guided to the turbine guide vanes 33 is small. Therefore, a specific speed of the turbine impeller can maintain higher than that of the pump impeller to recover energy efficiently.

In such a way, rotational energy recovered by the turbine 200 drives the pump shaft 1a via the turbine shaft 1b to save driving power of the electric motor.

As mentioned above, by using the multistage centrifugal pump as the pressurization pump for the reverse osmosis membrane and the multistage Francis hydro turbine as the concentrated water energy recovery apparatus and by positioning their impellers on a single shaft opposite each other, the compact, efficient, reliable, efficient, high-reliability, low-cost pump system having the energy recovery apparatus is realizable.

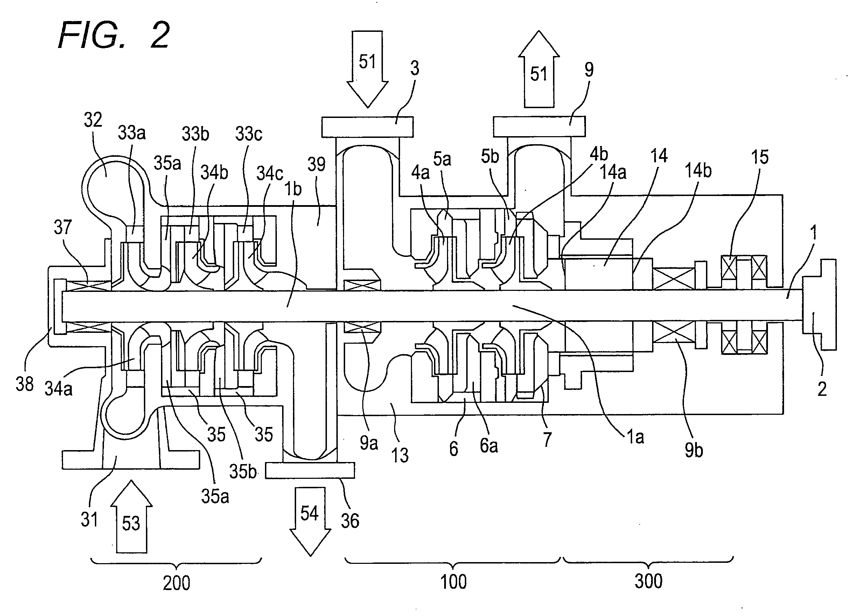

Next, Embodiment 2 is explained in reference to Fig. 2. Embodiment 2 is different from Embodiment 1 only in that a rotation shaft is horizontal and an axial thrust support device includes a balance drum 14 and a thrust bearing 15.

Since the shaft for the pump 100 and hydro turbine 200 is horizontal, cavitation performance is not excellent in comparison with a case in which a vertical shaft is installed in a dry pit, but removal of the electric motor is unnecessary for maintenance and thus the maintenance is easy. The balance drum 14 supports axial thrusts of the pump and hydro turbine by use of a difference of pressures respectively acting on front and back surfaces 14a and 14b of the drum 14. In comparison with the axial thrust balancing device of Embodiment 1, the balance drum 14 has no automatic regulation function. Therefore, it is difficult to balance the axial thrusts completely. The remaining thrust is supported by the thrust bearing 15. Also in this Embodiment, since the axial thrust of the hydro turbine impellers and pump impellers is partially canceled to become small, the same advantage as Embodiment 1 is provided in which an outer diameter of the balance drum 14 can be designed small and leakage loss can be reduced.

When the thrust bearing 15 uses a material (for example, a Poly-Ether-Ether-Ketone resin (PEEK)) having self-lubricating function, a lubrication device is unnecessary, reducing a cost of the bearing device. Therefore, also in Embodiment 2, like in Embodiment 1, a compact, efficient, reliable, low-cost pump system having a power recovery apparatus can be provided. In the above explanation, the vertical shaft structure uses the balancing disc device, and the horizontal shaft structure uses the balance drum and the thrust bearing, but the vertical shaft structure may use the balance drum and the thrust bearing, and the horizontal shaft structure may use the balancing disc device. The focus of the present invention is to provide a reliable, low-cost axial thrust support device which supports axial thrusts of the pump and hydro turbine and which is shared by the pump and hydro turbine.

The above embodiments are applicable for a pump, which is the heart of, for example, a desalination plant using a reverse osmosis membrane. Particularly the embodiments can provide a pump having an energy recovery apparatus preferable for a large capacity desalination plant.

## Claims

1. A pump system having an energy recover apparatus, the pump system comprising:

   a pressurization pump (100) having a casing (13) with an inlet (3); and
   a hydro turbine (200) used for the energy recover apparatus, the hydroturbine (200) having a casing (39) with an outlet (36),
   the energy recover apparatus recovering energy from high-pressure concentrated waste water to use the energy as driving force for the pressurization pump (100) when raw water (51) pressurized by the pressurization pump (100) is filtered by a reverse osmosis membrane (50),
   the hydro turbine (200) having multistage turbine impellers (34a, 34b, 34c) coaxial with a rotation shaft (1) of the pressurization pump (100), the turbine impellers (34a, 34b, 34c) being disposed opposite pump impellers (4a, 4b) of the pressurization pump (100),
   **characterized in that**
   the hydro turbine (200) is mounted below the pressurization pump (100) to position the pump inlet (13) adjacent the turbine outlet (36) and the number of stages of the impellers (34a, 34b, 34c) of the hydro turbine (200) is set to at least equal or greater than that of the pump (100).

2. The pump system according to claim 1, further comprising an axial thrust support device (300) supporting an axial thrust of the turbine impellers (34a, 34b, 34c) and an axial thrust of the pump impellers (4a, 4b).

3. The pump system according to claim 1 or 2, wherein the pressurization pump (100) and the hydro turbine (200) are disposed to position adjacent one another an inlet side (low pressure side) of the pressurization pump (100) and an outlet side (low pressure side) of the hydro turbine (200).

4. The pump system according to any one of claims 1 to 3, wherein the rotation shaft (1) for the pressurization pump (100) and the hydro turbine (200) is supported by a radial submerged bearing (11).

5. The pump system according to claim 2, wherein the axial thrust support device (300) is an axial thrust balancing device (10) using a balancing disc.

6. The pump system according to any one of claims 1 to 5, wherein an end of the rotation shaft (1) for the pressurization pump (100) and the hydro turbine (200) has a non-seal structure using an end cover (38).

**Patentansprüche**

1. Pumpensystem mit einer Energierückgewinnungsvorrichtung, wobei das Pumpensystem aufweist:

eine Druckerzeugungspumpe (100) mit einem Gehäuse (13) mit einem Einlass (3), und eine Wasserturbine (200), die als die Energierückgewinnungsvorrichtung verwendet wird, wobei die Wasserturbine (200) ein Gehäuse (39) mit einem Auslass aufweist, wobei die Energierückgewinnungsvorrichtung Energie von unter hohem Druck stehendem konzentrierten Abwasser rückgewinnt, um die Energie als Antriebskraft für die Druckerzeugungspumpe (100) zu nutzen, wenn Brauchwasser (51), das durch die Druckerzeugungspumpe (100) druckbeauf schlagt wird, mit einer Umkehrosmosemembran (50) gefiltert wird, wobei die Wasserturbine (200) mehrstufige Turbinenschaufelräder (34a, 34b, 34c) aufweist, die koaxial zu einer Welle (1) der Druckerzeugungspumpe (100) angeordnet sind, wobei die Turbinenschaufelräder (34a, 34b, 34c) gegenüber den Pumpenschaufelrädern (4a, 4b) der Druckerzeugungspumpe (100) angeordnet sind, **dadurch gekennzeichnet, dass** die Wasserturbine (200) unterhalb der Druckerzeugungspumpe (100) montiert ist, um den Pumpeneinlass (13) angrenzend an den Turbinenauslass (36) zu positionieren, und wobei die Anzahl der Stufen der Schaufelräder (34a, 34b, 34c) der Wasserturbine (200) wenigstens gleich oder größer als die Anzahl der Schaufelräder der Pumpe (100) gewählt ist.

2. Pumpensystem nach Anspruch 1, das ferner eine Axialschubaufnahmevorrichtung (300) aufweist, die einen axialen Schub der Turbinenschaufelräder (34a, 34b, 34c) und einen axialen Schub der Pumpenschaufelräder (4a, 4b) aufnimmt.

3. Pumpensystem nach Anspruch 1 oder 2, wobei die Druckerzeugungspumpe (100) und die Wasserturbine (200) so angeordnet sind, dass eine Einlassseite (Niederdruckseite) der Druckerzeugungspumpe (100) und eine Auslassseite (Niederdruckseite) der Wasserturbine (200) benachbart zueinander angeordnet sind.

4. Pumpensystem nach einem der Ansprüche 1 bis 3, wobei die Welle (1) für die Druckerzeugungspumpe (100) und die Wasserturbine (200) von einem eingetauchten Radiallager (11) getragen wird.

5. Pumpensystem nach Anspruch 2, wobei die Axialschubaufnahmevorrichtung (300) eine Axialschubausgleichsvorrichtung (10) ist, die eine Ausgleichsscheibe verwendet.

6. Pumpensystem nach einem der Ansprüche 1 bis 5, wobei ein Ende der Welle (1) für die Druckerzeugungspumpe (100) und die Wasserturbine (200) einen nicht abgedichteten Aufbau aufweist, der eine Endabdeckung (38) verwendet.

**Revendications**

1. Système de pompe ayant un appareil de récupération d'énergie, le système de pompe comprenant :

une pompe de pressurisation (100) ayant un carter (13) avec une entrée (3) ; et une hydro-turbine (200) utilisée pour l'appareil de récupération d'énergie, l'hydro-turbine (200) ayant un carter (39) avec une sortie (36), l'appareil de récupération d'énergie récupérant une énergie d'une eau usée concentrée haute pression pour utiliser l'énergie comme force d'entraînement pour la pompe de pressurisation (100) lorsqu'une eau brute (51) mise sous pression par la pompe de pressurisation (100) est filtrée par une membrane d'osmose inverse (50), l'hydro-turbine (200) ayant des ayant des hélices (34a, 34b, 34c) de turbine à étages multiples coaxiales avec un arbre de rotation (1) de la pompe de pressurisation (100), les hélices (34a, 34b, 34c) de turbine étant disposées à l'opposé d'hélices (4a, 4b) de pompe de la pompe de pressurisation (100), **caractérisé en ce que** l'hydro-turbine (200) est montée en-dessous de la pompe de pressurisation (100) pour positionner l'entrée (13) de pompe adjacente à la sortie (36) de turbine et le nombre d'étages des hélices (34a, 34b, 34c) de l'hydro-turbine (200) est fixé pour être au moins égal ou supérieur à celui de la pompe (100).

2. Système de pompe selon la revendication 1, comprenant en outre un dispositif support (300) de poussée axiale supportant une poussée axiale des hélices (34a, 34b, 34c) de turbine et une poussée axiale des hélices (4a, 4b) de pompe.

3. Système de pompe selon la revendication 1 ou 2, dans lequel la pompe de pressurisation (100) et l'hydro-turbine (200) sont disposées de façon à positionner adjacents l'un à l'autre un côté d'entrée (côté basse pression) de la pompe de pressurisation (100) et un côté de sortie (côté basse pression) de l'hydro-turbine (200).

4. Système de pompe selon l'une quelconque des revendications 1 à 3, dans lequel l'arbre de rotation (1) pour la pompe de pressurisation (100) et l'hydro-turbine (200) est supporté par un palier (11) noyé radial.

5. Système de pompe selon la revendication 2, dans lequel le dispositif support (300) de poussée axiale est un dispositif (10) d'équilibrage de poussée axiale utilisant un disque d'équilibrage.

6. Système de pompe selon l'une quelconque des revendications 1 à 5, dans lequel une extrémité de l'arbre de rotation (1) pour la pompe de pressurisation (100) et l'hydro-turbine (200) a une structure sans joint d'étanchéité utilisant une coiffe (38) d'extrémité.

# FIG. 1

FIG. 2

EP 2 302 201 B1

## FIG. 3

## FIG. 4

11

**EP 2 302 201 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1272453 B
- JP 6210140 A
- IT 272452 B